# EUROPEAN PATENT SPECIFICATION

(11) **EP 2 281 719 B1**
(45) Date of publication and mention of the grant of the patent: **23.03.2016**
(21) Application number: 10171795.7
(22) Date of filing: 03.08.2010
(51) Int. Cl.: B60Q 1/14, G06K 9/00, F21S 8/10

(54) **Light distribution control system for automotive headlamp**
Steuerungssystem für Lichtverteilung für Autoscheinwerfer
Système de contrôle de la distribution de la lumière dans un phare de voiture

(30) Priority: 04.08.2009 JP 2009181707
(43) Date of publication of application: 09.02.2011
(73) Proprietor: Koito Manufacturing Co., Ltd., Tokyo 108-8711 (JP)
(72) Inventor: Hori, Takashi, Shimizu-ku, Shizuoka-shi, Shizuoka 424-8764 (JP); Tomono, Toshikazu, Shimizu-ku, Shizuoka-shi, Shizuoka 424-8764 (JP); Ishikawa, Masaaki, Shimizu-ku, Shizuoka-shi, Shizuoka 424-8764 (JP); Nakanishi, Yutaka, Shimizu-ku, Shizuoka-shi, Shizuoka 424-8764 (JP)
(74) Representative: Neobard, William John

(56) References cited:
- EP-A1- 2 156 983
- EP-A1- 2 266 838
- WO-A1-2009/027221
- CH-A5- 644 315
- DE-A1-102008 014 182
- JP-A- 6 276 524
- JP-A- 2005 092 861
- JP-A- 2008 114 800
- US-A1- 2007 263 901
- US-A1- 2008 130 302

## Description

The present invention relates to a light distribution control system for controlling the light distribution of automotive headlamps.

In the conventional practice, proposed is a light distribution control system for controlling the light distribution of automotive headlamps structured such that the presence of leading vehicles and oncoming vehicles are detected based on images of a front area of a driver's vehicle picked up by a camera and then the light distribution pattern thereof is varied based on the detection result (See Patent Document 1 and Patent Document 2, for instance). Note herein that leading vehicle(s) and oncoming vehicle(s) may be hereinafter generically referred to as "forward vehicle" or "forward vehicles" as appropriate.

WO 2009/027221 A1 discloses a light distribution system wherein a controller is configured to move a left and a right illumination range according to the position of a detected vehicle. Said system determines the width of the detected vehicle based on the position of detected light sources and adds a safety margin. As a consequence, the non-illuminated part of the light distribution becomes progressively larger as the detected vehicle approaches. US 2008/0130302 A1 and EP 2 266 838 A1 describe known vehicle illumination systems. However EP 2 266 838 A1 has been published to late to be considered as a prior art document according to Artikel 54 (2) EPC.

[Patent Document 1] Japanese Unexamined Patent Application Publication 2008-94127.
[Patent Document 2] Japanese Unexamined Patent Application Publication 2008-37240.

The position of a forward vehicle varies from moment to moment while a driver's own vehicle is running. Thus, if the position of the forward vehicle changes before the light distribution pattern is changed based on the detected position of the forward vehicle, the driver of the forward vehicle may experience glare.

The present invention has been made in view of the foregoing circumstances. Embodiments provide a light distribution control system for controlling the light distribution of an automotive headlamp that is less likely to give glare to the drivers of forward vehicles.

To resolve the foregoing problems, a light distribution control system, for controlling the light distribution of an automotive headlamp, according to one embodiment of the present invention comprises: an automotive headlamp capable of controlling a range of illumination in a front area of a vehicle; a detection means configured to detect a forward vehicle, based on an image capturing the front area of the vehicle; and a control means configured to control the illumination range of the automotive headlamp in a manner such that the illumination of the automotive headlamp toward the forward vehicle detected by the detection means is suppressed and the illumination is applied around the forward vehicle. The control means controls the automotive headlamp in a manner such that the size of a space between the forward vehicle and the illumination range varies according to a position of the forward vehicle in the horizontal direction.

Embodiments will now be described by way of examples only, with reference to the accompanying drawings which are meant to be exemplary, not limiting and wherein like elements are numbered alike in several Figures in which:
FIG. 1 is a schematic cross-sectional view illustrating an internal structure of an automotive headlamp used in a light distribution control system according to an embodiment of the present invention;
FIG. 2 is a schematic perspective view of a rotatable shade;
FIGS. 3A to 3F illustrate light distribution patterns that can be illuminated by an automotive headlamp according to an embodiment;
FIG. 4 is a functional block diagram to describe a light distribution system according to an embodiment of the present invention;
FIG. 5 is an illustration to describe in greater detail a control performed when a split light distribution pattern is illuminated;
FIG. 6 is an illustration to describe in greater detail a control performed when a split light distribution pattern is illuminated;
FIG. 7 is an illustration to describe a method for enhancing the detection accuracy of a forward vehicle in a light distribution control system;
FIG. 8 is an illustration to describe a method for identifying a leading vehicle and an oncoming vehicle in a light distribution control system;
FIG. 9 is a flowchart to describe a method, for detecting a forward vehicle, according to an embodiment; and
FIG. 10 is an illustration to describe a method for selecting a light distribution pattern in a light distribution control system not according to the invention.

The invention will now be described by reference to embodiments. This does not intend to limit the scope of the present invention, but to exemplify it.

A light distribution control system, for controlling the light distribution of automotive headlamps, according to an embodiment of the present invention detects the presence of a forward vehicle traveling in front of his/her own vehicle and suppresses the emission of light toward the thus detected forward vehicle. While suppressing the illumination toward the detected forward vehicle, the light distribution control system according to the present embodiment controls the illumination range of the automotive headlamp in a manner such that the illumination of the automotive headlamp is applied around the forward vehicle. The light distribution control system controls the automotive headlamp in a manner such that a space between the forward vehicle and the illumination range varies according to the position of the forward vehicle in the horizontal direction. For example, control is performed in a manner such that the size of the space therebetween becomes larger as the space shifts outward in the vehicle width direction from a middle position in the vehicle width direction. As a result, an appropriate space can be ensured between the forward vehicle and the illumination range and therefore glare is less likely to be experienced by a driver of the forward vehicle.

Hereinbelow, the embodiments of the present invention will be described in detail with reference to the accompanying drawings.

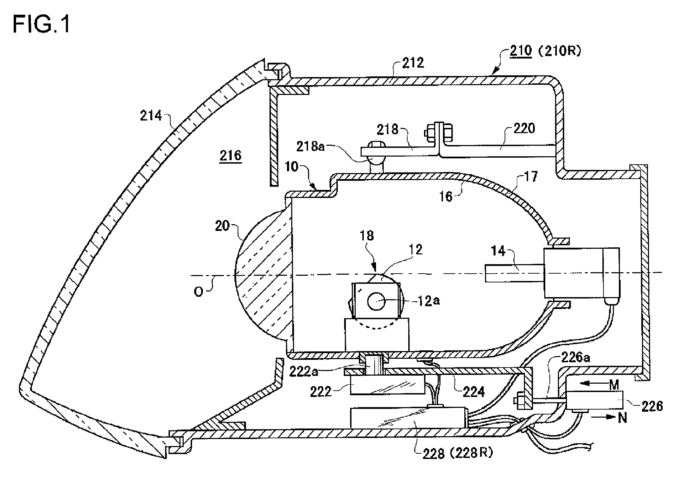

FIG. 1 is a schematic cross-sectional view illustrating an internal structure of an automotive headlamp 210 used in a light distribution control system according to an embodiment of the present invention. The automotive headlamp 210 illustrated in FIG. 1 is a light distribution variable headlamp and is installed on each end in the vehicle width direction. The structures of the automotive headlamps 210 installed on the both ends are practically identical to each other. In the following description, therefore, the structure of a right-hand automotive headlamp 210R will be explained as a typical example.

The automotive headlamp 210R has a lamp chamber 216, comprised of a lamp body 212 having an opening disposed frontward of a vehicle and a transparent cover covering the opening of the lamp body 212. The lamp chamber 216 contains a lamp unit 10 illuminating the front area of the vehicle. A lamp bracket 218 having a pivot mechanism 218a, which is the center of a swing motion of the lamp unit 10, is formed in a part of the lamp unit 10. The lamp bracket 218 is connected with a body bracket 220, which is installed upright on an inner wall of the lamp body 212, by fasteners such as screws. Accordingly, the lamp unit 10 is fixed to a predetermined position of the lamp chamber 216, and at the same time the lamp unit 10 is capable of being varied for example in a forward leaning posture or a backward leaning posture with the pivot mechanism 218a as the center.

A rotation axis 222a of a swivel actuator 222 to constitute adaptive front-lighting system (AFS) for use in curved roadways, which illuminates the traveling direction when a driver drives along a curved roadway and the like, is fixed to the underside of the lamp unit 10. The swivel actuator 222 swivels the lamp unit 10 in the traveling direction with the pivot mechanism 218a positioned in the center, based on the data on the steering amount supplied from the vehicle, the data on the shape of a road supplied from a navigation system, the positional relationship of a forward vehicle relative to a driver's own vehicle, and so forth. As a result, an illumination range of the lamp unit 10 does not cover the front area of the vehicle but covers beyond a curve of curved roadway, thereby enlarging the field of front vision of a driver. The swivel actuator 222 may be constructed by stepping motor, for instance. If the swivel angle is fixed, a solenoid and the like may be used.

The swivel actuator 222 is fixed to a unit bracket 224. A leveling actuator 226 disposed external to the lamp body 212 is connected with the unit bracket 224. The leveling actuator 226 is configured by, for example, a motor used to elongate and contract a rod 226a in the direction of the arrows M and N, respectively. If the rod 226a elongates along the arrow M, the lamp unit 10 will swing into a backward leaning posture with the pivot mechanism 218a as the center. Conversely, if the rod 226a contracts along the arrow N, the lamp unit 10 will swing into a forward leaning posture with the pivot mechanism 218a as the center. As the lamp unit 10 takes the backward leaning posture, the leveling can be so adjusted as to place the light axis in an upward position. Also, as the lamp unit 10 takes the forward leaning posture, the leveling is so adjusted as to place the light axis in a downward position. In this manner, the light axis can be adjusted according as the vehicle is inclined forward or backward. As a result, the forward illumination reachable distance by the automotive headlamp 210 can be adjusted to an optimal distance. In other words, the range of forward illumination covered by the automotive headlamp 210 can be optimally adjusted.

It is to be noted that the leveling can also be adjusted according as the vehicle is inclined forward or backward while the vehicle is moving. For example, the vehicle is inclined backward if the vehicle accelerates while running, and the vehicle is inclined forward if the vehicle decelerates while running. Accordingly, the direction in which the automotive headlamps 210 illuminate varies according as the vehicle is inclined forward or backward, so that the distance within which the forward illumination can reach and cover becomes longer or shorter. Thus the forward illumination reachable distance can be optimally adjusted while running if the leveling is adjusted in real time based on the posture of the vehicle. This leveling adjustment is may be called "auto leveling" also.

An illumination control unit 228, which controls the turning on and off of the lamp unit 10 and controls the formation of light distribution patterns, is installed on an inner wall of the lamp chamber 216, for example, at a low position of the lamp unit 10. In the case of FIG. 1, an illumination control unit 228R for controlling the automotive headlamp 210R is placed. The illumination control unit 228R also controls the swivel actuator 222, the leveling actuator 226 and so forth.

The lamp unit 10 may have an aiming adjustment mechanism. For example, a pivot mechanism, which is the center of a swing motion when the aiming adjustment is to be done, is disposed in a connection part connecting the rod 226a of the leveling actuator 226 to the unit bracket 224. A pair of aiming adjustment screws, spaced apart from each other, which advance and retreat in the longitudinal direction of the vehicle are placed on a connection surface jointed by the body bracket 220 and the lamp bracket 218. If, for example, two aiming adjustment screws are advanced, the lamp unit 10 will be forward inclined with the aiming pivot mechanism as the center. As a result, the light axis is so adjusted as to be placed in a downward position. Similarly, if two aiming adjustment screws are retreated, the lamp unit 10 will be backward inclined with the aiming pivot mechanism as the center. As a result, the light axis is so adjusted as to be placed in an upward position. Also, if a left-side aiming adjustment screw in the vehicle width direction is advanced, the lamp unit 10 will be in a right turning posture with the aiming pivot mechanism as the center. As a result, the light axis is so adjusted as to be placed in a rightward position. Also, if a right-side aiming adjustment screw in the vehicle width direction is advanced, the lamp unit 10 will be in a left turning posture with the aiming pivot mechanism as the center. As a result, the light axis is so adjusted as to be placed in a leftward position. The aiming adjustment is done when vehicles are shipped from a factory or they undergo an automobile safety inspection or at the time of replacement of the automotive headlamp 210. Through the aiming adjustment, the automobile headlamp 210 is adjusted to a prescribed posture which is specified by a design in the first place; the light distribution patterns according to the present embodiment are formed based on this posture.

The lamp unit 10 includes a shading mechanism 18 including a rotatable shade 12, a bulb 14 as a light source, a lamp housing 17 supporting a reflector 16 against the inner wall, and a projection lens 20. For example, incandescent lamps, halogen lamps, discharge lamps and LEDs may be used for the bulb 14. The present embodiment shows an example where the bulb 14 is a halogen lamp. The reflector 16 reflects the light emitted from the bulb 14. Part of both the light emitted from the bulb 14 and the light reflected by the reflector 16 is guided to a projection lens 20 through the rotatable shade 12 that constitutes the shading mechanism 18.

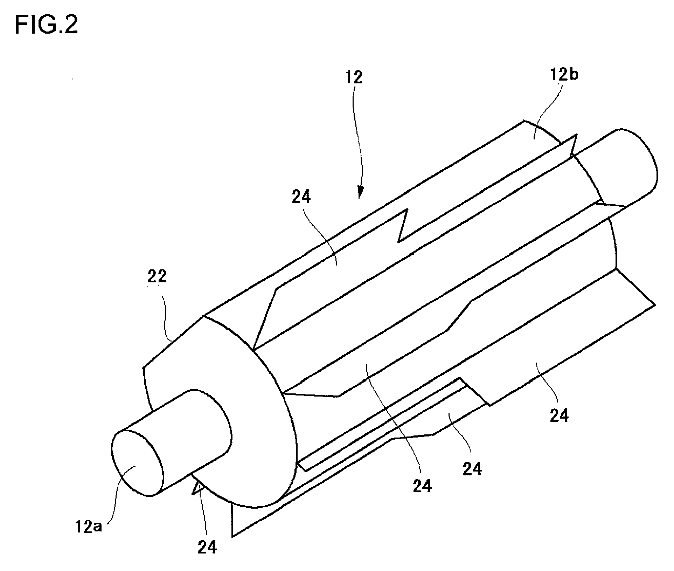

FIG. 2 is a schematic perspective view of the rotatable shade 12. The rotatable shade 12 is a cylindrically-shaped member that is rotatable about a rotation axis 12a. The rotatable shade 12 has a notch (flattened portion) 22 in which a part of the rotatable shade 12 is cut out in its axial direction, and has a plurality of plate-shaped shade plates 24 on the outer circumferential surface 12b other than the notch 22. The rotatable shade 12 can move the notch 22 or any one of the plurality of shade plates 24 to a position on the rear focal plane including the rear focal point of the projection lens 20, according to its rotation angle. Formed are light distribution patterns following the shape of ridge lines of the shade plates 24 positioned on a light axis O in association with the rotation angles of the rotatable shade 12. For example, a low beam distribution pattern or a light distribution pattern partially having characteristics of the low beam distribution pattern is formed by moving any one of the plurality of shade plates 24 onto the light axis O and thereby shading a part of the light emitted from the bulb 14. Also, a high beam distribution pattern is formed by moving the notch 22 onto the light axis O, thereby not shading the light emitted from the bulb 14.

The rotatable shade 12, which is rotatable by a shade motor (not shown), can move the shade plates 24 or the notch 22 used to form a desired light distribution pattern onto the light axis O by controlling the rotation amount of the shade motor. It is to be noted here that the notch 22 provided on the outer circumferential surface 12b of the rotatable shade 12 may not be provided at all so that the rotatable shade 12 can be designed to have the shading function only. In such a case, the rotatable shade 12 is retreated from the position of the light axis O by driving the solenoid, for example, when a high beam distribution pattern is to be formed. By employing such a structure described as above, the light distribution pattern is fixed to a low beam distribution pattern or a light distribution pattern similar thereto in the event that the shade motor rotating the rotatable shade 12 should fail. In other words, that the rotatable shade 12 is fixed to the posture for the formation of a high beam distribution pattern is reliably avoided, thereby realizing the fail-safe function.

The projection lens 20 is arranged on the light axis O that extends in the longitudinal direction of the vehicle, and the bulb 14 is arranged on a rear side of a rear focal plane of the projection lens 20. The projection lens 20 is a plano-convex aspheric lens, having a convex front surface and a plane rear surface, which projects a light source image formed on the rear focal plane onto a virtual vertical screen as a reverted image.

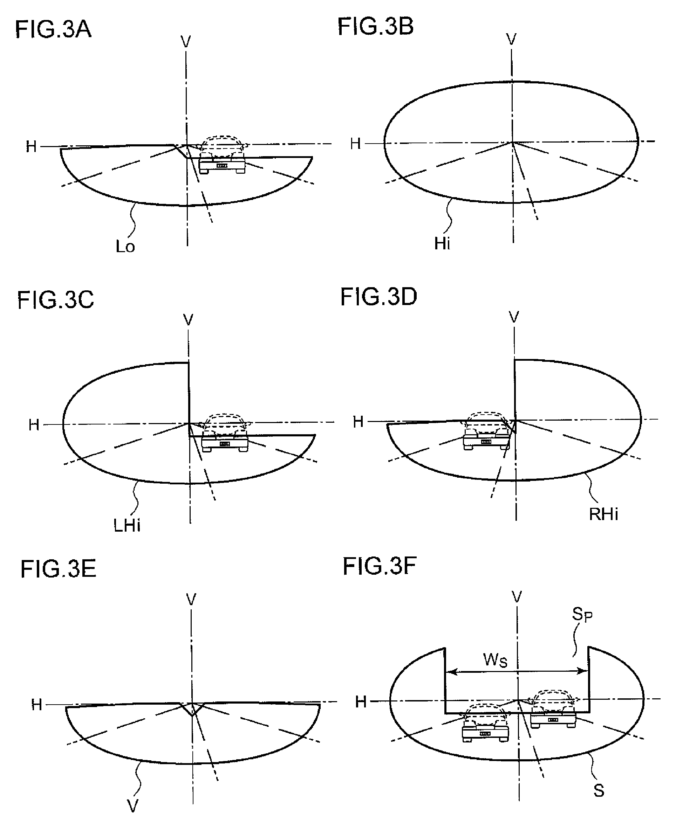

FIGS. 3A to 3F illustrate light distribution patterns that can be illuminated by the automotive headlamp 210 according to the present embodiment. FIGS. 3A to 3F illustrate the light distribution patterns each formed on a virtual vertical screen set at a point 25 meters ahead of the automotive headlamps 210. In the present embodiment, six light distribution patterns illustrated in FIGS. 3A to 3F may be formed. Each of the light distribution patterns shown in FIGS. 3A to 3F is a combined light distribution pattern that is formed by superimposing one of the light distribution patterns, formed by the automotive headlamps 210 installed on both ends in the vehicle width direction, onto the other thereof.

FIG. 3A illustrates a low beam distribution pattern Lo. The low beam distribution pattern Lo is a light distribution pattern so designed as not to give glare to a driver of an oncoming vehicle and/or pedestrians while driving on city streets and the like in an area under "keep to the left" traffic regulations.

FIG. 3B illustrates a high beam distribution pattern Hi. The high beam distribution pattern Hi is a light distribution pattern in which the maximum field of front vision of the driver can be obtained.

FIG. 3C shows a left-sided high beam distribution pattern LHi, which is used in an area under "keep to the left" traffic regulations. The left-sided high beam distribution pattern LHi is formed such that a left-sided high beam distribution pattern formed by a left-side automotive headlamp 210 and a low beam distribution pattern formed by a right-side automotive headlamp 210 are combined together. The left-sided high beam distribution pattern LHi formed as above is suitable for a case where there is no leading vehicles and pedestrians on the side of a driver's own lane and there is an oncoming vehicle and/or pedestrian on an oncoming traffic lane side. Thus, the left-sided high beam distribution pattern LHi is a light distribution pattern so designed as not to give glare to a driver of an oncoming vehicle and/or pedestrians on an oncoming traffic lane side while the driver's visibility of the road ahead is improved.

FIG. 3D shows a right-sided high beam distribution pattern RHi, which is used in an area under "keep to the left" traffic regulations. The right-sided high beam distribution pattern RHi is formed such that a right-sided high beam distribution pattern formed by a right-side automotive headlamp 210 and a low beam distribution pattern formed by a left-side automotive headlamp 210 are combined together. The right-sided high beam distribution pattern RHi is suitable for a case where there is a leading vehicle and/or pedestrian on the side of the driver's own lane and there is no oncoming vehicles and pedestrians on the oncoming traffic lane side. Thus, the right-sided high beam distribution pattern RHi is a light distribution pattern so designed as not to give glare to a driver of a leading vehicle and/or pedestrians on the driver's own traffic lane side while the driver's visibility of the road ahead is improved.

FIG. 3E shows a V-shaped distribution pattern V that suppresses the illumination in the vicinity of the intersection of a vertical line V and a horizontal line H on the virtual vertical screen. The V-shaped distribution pattern V is formed as follows. A low beam distribution pattern, as shown in FIG. 3A, is formed by the left-side automotive headlamp 210. At the same time, a low beam distribution pattern used in an area under "keep to the right" traffic regulations, namely a light distribution pattern which is line-symmetric with respect to the vertical line V of the light distribution pattern shown in FIG. 3A, is formed by the right-side automotive headlamp 210. These two different light distribution patterns are superimposed on each other. As a result, formed is a V-shaped distribution pattern V that suppresses the illumination in the vicinity of the intersection of a vertical line V and a horizontal line H where a leading vehicle and/or an oncoming vehicle traveling quite far from the his/her own vehicle are possibly existent. The V-shaped distribution pattern V is a light distribution pattern designed so that obstacles on the road shoulder and the like on the driver's own lane side and oncoming traffic lane side the side driver's own lane side can be easily recognized by the driver of a vehicle while suppressing glare to the driver of the forward vehicle traveling quite far.

FIG. 3F shows a split light distribution pattern S. The split light distribution pattern S is a light distribution pattern that can suppress the emission of light to the driver's own lane and the oncoming traffic lane and at the same time can ensure an excellent field of view outside the driver's own lane and the oncoming traffic lane. This split light distribution pattern S has a split region Sp that separates the illumination range in the high beam distribution pattern. The emission of light is inhibited in the split region Sp as compared with the illumination range. For example, where there are a leading vehicle and an oncoming vehicle running in front of the driver's own vehicle, the left-sided high bean distribution pattern as shown in FIG. 3C is formed while the left-side automotive headlamp 210 is swiveled leftward at a predetermined angle. At the same time, the right-sided high bean distribution pattern as shown in FIG. 3D is formed while the right-side automotive headlamp 210 is swiveled rightward at a predetermined angle. The split light pattern S as shown in FIG. 3F can be formed by superimposing the left-sided high beam distribution pattern and the right-sided high beam distribution pattern on each other.

In the light distribution control system according to the present embodiment, the swivel angles of the left-side and right-side automotive headlamps are adjusted. Thereby, the position of split region Sp and a split width Ws, which equals the width of the split region Sp in the horizontal direction thereof, can be varied according to the position of the forward vehicle detected by a camera discussed later. For example, if an oncoming vehicle approaches the driver's own vehicle, the left-side and right-side automotive headlamps 210 will be both gradually swiveled rightward. This can form the split light distribution pattern S illuminating the periphery of the oncoming vehicle while suppressing the illumination of the automotive headlamps 210 directed toward the oncoming vehicle.

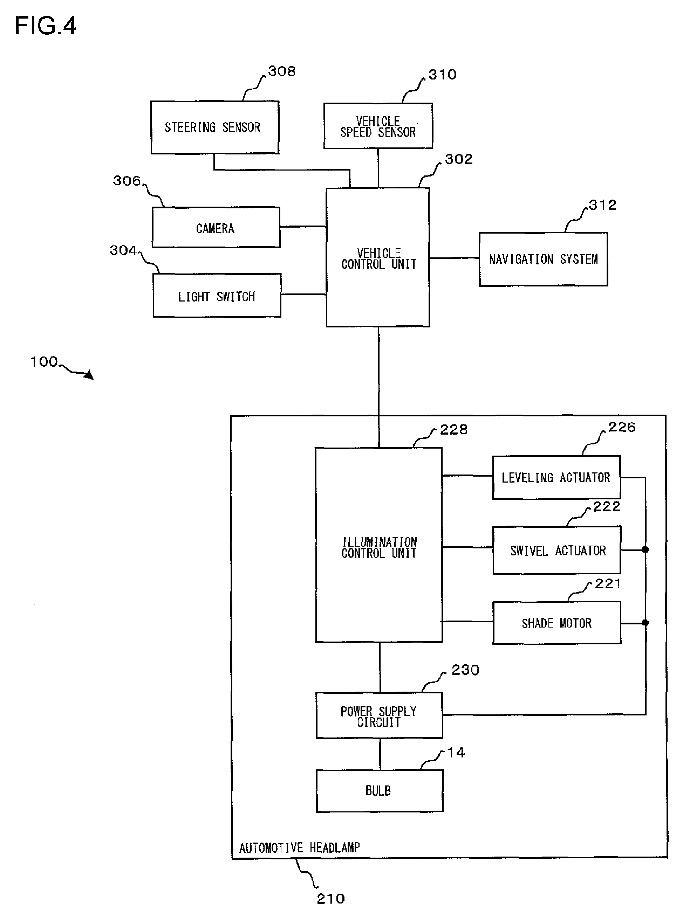

FIG. 4 is a functional block diagram to explain a light distribution system 100 according to an embodiment of the present invention. The light distribution system 100 includes the above-described automotive headlamps 210, a vehicle control unit 302 for controlling the automotive headlamps 210, a light switch 304, a camera 306, a steering sensor 308, a vehicle speed sensor 310, and a navigation system 312.

An illumination control unit 228 in the automotive headlamp 210 controls a power supply circuit 230 according to instructions given from the vehicle control unit 302 mounted on a vehicle, and controls the turning on of the bulb 14. Also, the illumination control unit 228 controls a leveling actuator 226, a swivel actuator 222, and a shade motor 221 according to instructions given from the vehicle control unit 302.

For example, when making a turn along a curve or making a left or right turn, the illumination control unit 228 controls the swivel actuator 222 so as to place the light axis of the lamp unit 10 in a traveling direction. Also, the illumination control unit 228 controls the leveling actuator 226 according as the vehicle is inclined forward or backward at the time of vehicle's acceleration or deceleration, and thereby adjusts the light axis of the lamp unit 10 in the vertical direction of the vehicle. As a result, the forward illumination reachable distance is adjusted to the optimal distance. The illumination control unit 228 controls the leveling actuator 226, the swivel actuator 222, and the shade motor 221 according to instructions on the light distribution given from the vehicle control unit 302.

In the light distribution control system 100, the light distribution patterns are switchable manually if the driver sets the light switch 304 accordingly. In what follows, a mode in which the light distribution is controlled manually as described above will be called "manual mode" as appropriate. For example, if the driver selects the low beam distribution pattern, the vehicle control unit 302 will instruct the illumination control unit 228 to form the low beam distribution pattern. Upon receipt of such an instruction, the illumination control unit 228 controls the leveling actuator 226, the swivel actuator 222 and the shade motor 221 so that the low beam distribution pattern can be formed.

Also, without resorting to the light switch 304, the light distribution control system 100 can detect conditions surrounding the vehicle using various kinds of sensors and thereby can form a light distribution pattern best suited to the vehicle condition. Hereinafter, such a mode in which to control the light distribution pattern will be called "adaptive driving beam (ADB) mode" as appropriate.

For example, if a forward vehicle is detected, the vehicle control unit 302 will determine that glare to the forward vehicle must be prevented. Thus, the vehicle control unit 302 instructs the illumination control unit 228 to form the low beam distribution pattern, for example. Also, if it is detected that no forward vehicles is present, the vehicle control unit 302 will determine that the field of view of the driver must be improved. Thus, the vehicle control unit 302 instructs the illumination control unit 228 to form the high beam distribution pattern, for example. Also, if the driver desires to have a sufficient field of view around the forward vehicle, the vehicle control unit 302 will instruct the illumination control unit 228 to form the split light distribution pattern, for example.

To detect a forward vehicle in such a manner as described above, the camera 306 such as a stereo camera, which is a means for recognizing a target object, is connected to the vehicle control unit 302. The image data captured by the camera 306 are transmitted to the vehicle control unit 302. Then the vehicle control unit 302 processes the signals sent from the camera 306 and analyzes the images so as to detect a forward vehicle, if any, within an image pickup range. The information on a forward vehicle to be detected may include the position of the forward vehicle, whether the forward vehicle is a leading vehicle or oncoming vehicle, and the like. A method for detecting the information on a forward vehicle will be discussed later. The vehicle control unit 302 selects an optimal light distribution pattern, based on the acquired information on a forward vehicle, and instructs the illumination control unit 228 to form the selected light distribution pattern. Note that the method for detecting a forward vehicle may be changed as appropriate and note also that other detection means, such as millimeter-wave radar and infrared radar, may be used instead of the camera 306. Also, the detection means may be used in combination of the other detection means and the camera 306.

Also, the vehicle control unit 302 can also acquire information from the steering sensor 308, the vehicle sensor 310 and the like normally installed in the vehicle, so that a light distribution to be formed can be selected according to the running conditions and/or traveling posture of the vehicle, and the light distribution pattern can be varied, in a simplified manner, by varying the direction of the light axis. For example, if it is determined, based on the information sent from the steering sensor 308, that the vehicle is turning, the vehicle control unit 302 will control the rotation of the rotatable shade 12 so that a light distribution enabling to improve the field of view in the turning direction can be formed. Also, the swivel actuator 222 may be controlled by directing the light axis toward the turning direction without changing the rotating state of the shade 12 so that the field of view can be improved.

Also, the vehicle control unit 302 can acquire information on the shape and the configuration of roadway, information on the installation of traffic signs, and the like from the navigation system 312. If these pieces of information are acquired beforehand, a light distribution pattern suitable for the roadway can be smoothly formed by controlling the leveling actuator 226, the swivel actuator 222, the shade motor 221 and the like. For example, if information indicating that the street lights are few and the visibility is low is acquired from the navigation system 312, the vehicle control unit 302 will select a high beam distribution pattern when there is no forward vehicles and select a split light distribution pattern when a forward vehicle is detected.

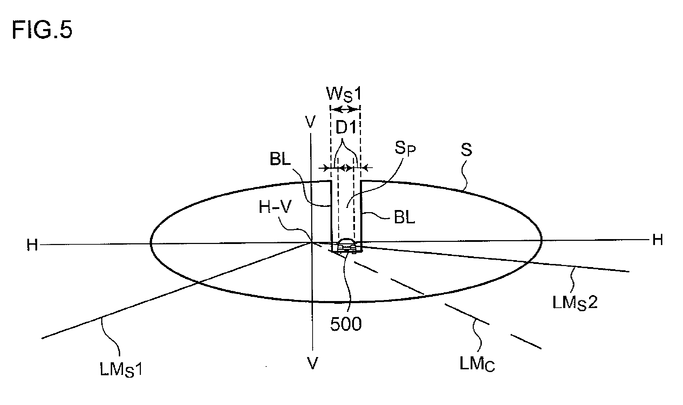

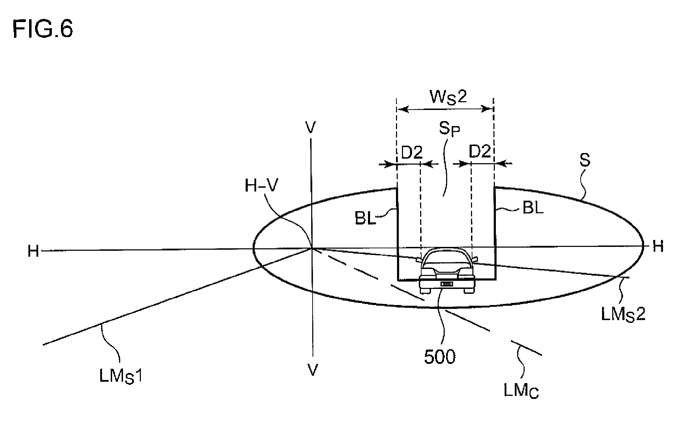

FIG. 5 and FIG. 6 are illustrations to explain in greater detail a control performed when a split light distribution pattern is illuminated. In FIG. 5 and FIG. 6, the split light distribution pattern S formed on the virtual vertical screen, set at a point 25 meters ahead of a vehicle, by the light emitted from the automotive headlamp 210 is superimposed on a figure of image of a road surface ahead of the vehicle seen from a height where the camera 306 is placed, in a case where the vehicle is running on a straight paved road of one lane on each direction (two lanes in total).

As shown in FIG. 5 and FIG. 6, a center line LMc positioned in the center of the road surface, a left sideline LMs1 and a right sideline LMs2 positioned on the left side and the right side thereof, respectively, are formed on the road surface ahead of the vehicle as lane marks demarcating a lane on which vehicles travel. The center line LMc is formed as intermittent lane marks, whereas the left sideline LMs1 and the right sideline LMs2 are formed as continuous lane marks. The left sideline LMs1 extends leftward from an H-V point (the intersection of a horizontal line (H-H line) and a vertical line (V-V line)) which is a vanishing point of a perspective diagram, whereas the center line LMc and the right sideline LMs2 extend rightward from the H-V point.

In the following description, a case where there is one oncoming vehicle 500 on the oncoming traffic lane side. FIG. 5 illustrates a situation where the oncoming vehicle 500 exists quite far from the driver's vehicle, whereas FIG. 6 a situation where the oncoming vehicle 500 approaches the driver's vehicle after a certain length of time has elapsed since the situation of FIG. 5.

If the split light distribution pattern is selected in the manual mode or ADB mode, the vehicle control unit 302 will detect the oncoming vehicle 500 based on the image picked up by the camera 306. Then, while suppressing the illumination of the automotive headlamps 210 directed to the oncoming vehicle 500, the vehicle control unit 302 instructs the illumination control unit 228 to form a light distribution pattern such that the illumination is applied around the oncoming vehicle 500. In other words, the vehicle control unit 302 instructs the illumination control unit 228 to form the light distribution pattern such that at least a portion of the oncoming vehicle 500 positioned above the headlamps thereof is contained within the split region Sp. In this case, the light distribution is so formed as to be contained within the "portion of the oncoming vehicle 500 positioned above the headlamps thereof" because the driver's viewing point is positioned above the headlamps in a normal vehicle. The position of the oncoming vehicle 500 can be recognized by detecting high-intensity light spots in the image picked up by the camera 306.

The oncoming vehicle 500 is detected at predetermined time intervals. Also, the light distribution pattern is controlled at predetermined time intervals. The vehicle control unit 302 forms the split light distribution pattern S so that the position of the split region Sp and the split width Ws thereof vary keeping pace with the position and movement of the oncoming vehicle 500. In FIG. 5 and FIG. 6, as the vehicle comes closer to the driver's vehicle from quite far, the split region Ws changes from Ws1 to Ws2 and thus becomes wider and the split region Sp is displaced outward along the vehicle width direction from an approximately middle position in the vehicle width direction. This arrangement assures a sufficient field of view around the oncoming vehicle 500 while avoiding glare to the driver of the oncoming vehicle 500.

Further, according to the present embodiment, when the split light distribution S is to be formed, the vehicle control unit 302 varies the size of a space D between the oncoming vehicle 500 and the illumination range according to the position of the forward vehicle in the horizontal direction. More specifically, control is performed such that the size of the space D becomes larger as the position of the forward vehicle in the horizon direction shifts outward in the vehicle width direction from a middle position in the vehicle width direction. The space D is expressed by an angle formed by a line extending from the driver's own vehicle to the side surface of the oncoming vehicle 500 and a line extending from the driver's own vehicle to a boundary BL between the split region Sp and the illumination range. If the oncoming vehicle 500 is located near the middle position in the vehicle width direction as shown in FIG. 5, the space D equals D1. If, on the other hand, the oncoming vehicle 500 is dislocated outward in the vehicle width direction as shown in FIG. 6, the space D equals D2 (D2>D1). In the present embodiment, the space D is equal bilaterally in the oncoming vehicle 500 but it may not be equal bilaterally.

In order not to give glare to the driver of the oncoming vehicle 500, the space D is preferably as large as possible. If the space D is small, the driver of the oncoming vehicle 500 may experience glare due to a control delay in the change of a light distribution pattern. The "control delay" meant here is the time lag between when the image of a front area of a vehicle is captured by the camera 306 and when the optimal light distribution pattern is determined thereafter and said light distribution pattern is illuminated. Nevertheless, for the purpose of assuring the field of view around the oncoming vehicle 500, it is preferable that the space D be made as small as practicable. The inventors of the present invention have been diligently conducting research on the derivation of an optimal value for the space D that meets such conflicting requirements. As a result of such diligent studies, the inventors directed their attentions to the fact that as the position of the oncoming vehicle 500 in the horizontal direction thereof shifts outward from the middle position in the vehicle width direction, the movement speed along the vehicle width direction increases. Under such circumstances, the inventors of the present invention have come to recognize a technique in which the space D is made larger as the position of the oncoming vehicle 500 in the horizontal direction thereof shifts outward from the middle position in the vehicle width direction.

By employing this technique, if the oncoming vehicle 500 is located near the middle position in the vehicle width direction with a relatively low movement speed along the vehicle width direction, a sufficient field of view for the oncoming vehicle 500 can be ensured by making the space D smaller. Also, since the movement speed along the vehicle width direction is relatively low, the driver of the oncoming vehicle 500 does not suffer from the glare caused by the control delay even though the space D is small. If, on the other hand, the oncoming vehicle 500 is located outward in the vehicle width direction with a relatively high movement speed along the vehicle width direction, the incident of giving glare to the driver of the oncoming vehicle 500 can be avoided by making the space D larger. By employing the light distribution control system 100 according to the present embodiment as configured and operative as described above, when the split light distribution pattern S is illuminated, a field of view can be preferably ensured around the oncoming vehicle 500 while avoiding glare to the driver of the oncoming vehicle 500. Though in FIG. 5 and FIG. 6 a description is given of an exemplary case where a forward vehicle is the oncoming vehicle 500 but the similar configurations and operations may also be applicable to a leading vehicle.

In FIG. 5 and FIG. 6, a description has been given of the split light distribution pattern S designed such that the upper part of the oncoming vehicle 500 is not illuminated. However, to ensure a field of view in the upper part of the oncoming vehicle 500, the light distribution control system 100 may be configured so that a light distribution pattern illuminating the upper part of the oncoming vehicle 500 can be illuminated in addition to the split light pattern as shown in FIG. 5 and FIG. 6. As for the space between the oncoming vehicle 500 and the illumination range in the vehicle height direction, control is performed such that the size of the space therebetween becomes larger as the position of the oncoming vehicle 500 in the horizontal direction shifts outward in the vehicle width direction from a middle position in the vehicle width direction. This arrangement preferably assures the field of view around the oncoming vehicle 500 while avoiding glare to the driver of the oncoming vehicle 500.

The vehicle control unit 302 may estimate a change in the position of the forward vehicle, based on the image data captured by the camera 306, road information supplied from the navigation system 312 and the like. Then, based on the prediction, the vehicle control unit 302 may calculate beforehand the position of the split region Sp, the split width Ws, the space D and the like. In such a case, the control delay caused when the light distribution pattern is varied can be reduced and therefore the space D can be reduced. As a result, the visibility around the forward vehicle can be further improved.

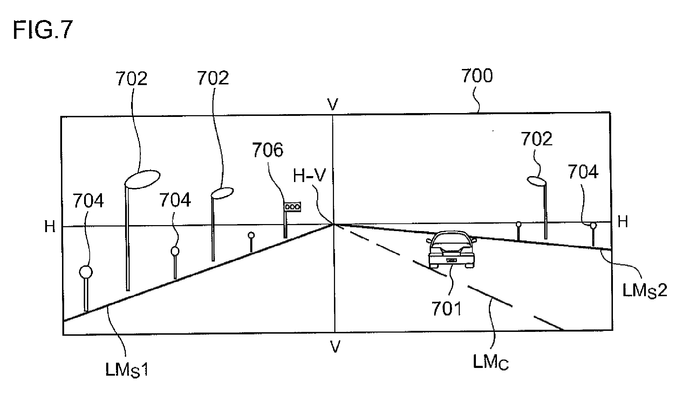

FIG. 7 is a diagram to explain a method for enhancing the detection accuracy of a forward vehicle in the light distribution control system 100. Enhancing the detection accuracy of a forward vehicle allows avoiding glare to the driver of the forward vehicle.

FIG. 7 shows an image 700 picked up by the camera 306. The image 700 contains a forward vehicle 701, street lights 702, delineators 704, a traffic light 706, and so forth.

In the light distribution control system 100, the vehicle control unit 302 detects the forward vehicle 701 by observing a high-intensity light spot or spots in the image 700 picked up by the camera 306. At the same time, there are other lights, existent on the road, emitted from other than the forward vehicle 701, such as the street lights 702, the delineators 704 and the traffic light 706. Thus objects other than the forward vehicle 701 may be mistakenly detected as the forward vehicle 701.

Thus, in the light distribution control system 100 according to the present embodiment, the vehicle control unit 302 detects the lane marks such as the left sideline LMs1, the right sideline LMs2 and the center line LMc, based on the image picked up by the camera 306. Then, based on these lane marks detected, the vehicle control unit 302 determines an H-V point which is a vanishing point (infinite distance at the camera mount height). The vehicle control unit 302 determines that a high-intensity light spot observed at a height above a horizontal line (H-H line) passing through the H-V point is not the forward vehicle 701. In other words, the vehicle control unit 302 detects the presence of the forward vehicle 701 based on a region lying at or below the horizontal line passing through the H-V point, in the images 700 picked up by the camera 306.

Such an image recognition method as described above is conceived and derived based on the knowledge described below. That is, the street lights 702, the traffic light 706 and the like are installed in positions higher than the position at which the camera 306 installed in an ordinary passenger car is mounted and, on the other hand, the automotive lamps are usually mounted at positions below the camera 306. Using this method, the situation where the street lights 702, the traffic light 706 and the like are mistakenly detected as the forward vehicle 701 can be avoided.

In the present embodiment, the region at or below the horizontal line passing through the H-V point is set as the region where the high-intensity light spots are observed. However, this should not be considered as limiting and, for example, it is possible to detect the forward vehicle 701 based on a region lying at or below a predetermined height in the vertical direction.

Further, if, in the light distribution control system 100 according to the present embodiment, the observed high-intensity light spots in the image 700 picked up by the camera 306 are composed of a sequence of points having a predetermined rule or pattern, it will be determined that the high-intensity light spots do not belong to the forward vehicle 701.

The delineators 704 placed on the road shoulders retro-reflect the light emitted from the automotive lamps such as headlamps and thereby indicate the road shape and the position of road shoulders to the drivers. Since the delineators 704 each having an equal height are placed at equal intervals on the road shoulder, the reflected lights are seen as a sequence of points having a predetermined rule. Thus, if the observed high-intensity light spots are a sequence of points having a predetermined rule as described above, it will be determined that the light spots do not belong to the forward vehicle 701, thereby improving the detection accuracy of the forward vehicle 701.

The delineators 704 are normally white or orange in color, and those of the same color tone are generally used in the same area. Thus the lights reflected from a plurality of delineators 704 are all in the same color. Utilizing this characteristic, it is determined that a sequence of high-intensity light spots do not belong to the forward vehicle 701 if the sequence of high-intensity light spots observed are of the same color, so that the detection accuracy of the forward vehicle 701 can be further improved.

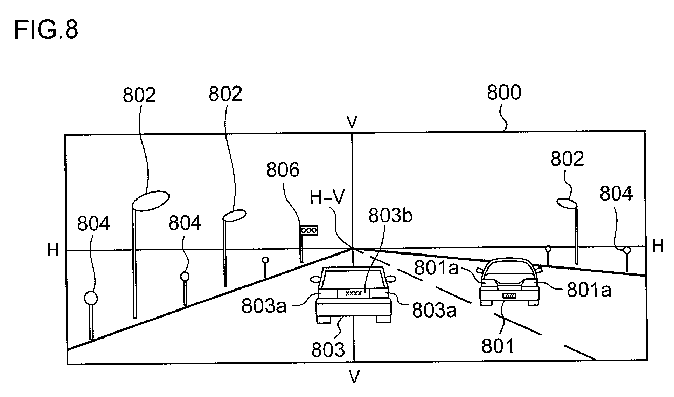

FIG. 8 is a diagram to explain a method for identifying a leading vehicle and an oncoming vehicle in the light distribution control system 100. Identifying a leading vehicle and an oncoming vehicle allows the light distribution pattern to be preferably controlled, thereby avoiding glare to the driver of the forward vehicles.

FIG. 8 shows an image 800 picked up by the camera 306. The image 800 contains an oncoming vehicle 801, a leading vehicle 803, street lights 802, delineators 804, a traffic light 806, and so forth.

As described above, the vehicle control unit 302 detects a forward vehicle by observing a high-intensity light spot or spots in the image picked up by the camera 306. To identify whether the forward vehicle is a leading vehicle or an oncoming vehicle, a method conceivable for identifying it uses the fact that the light emitted from the tail lamps of a leading vehicle is red light, whereas the light from the headlamps of an oncoming vehicle is white light. That is, it is determined that a leading vehicle is present if the observed light spot is red and that an oncoming vehicle is present if the observed light spot is white. To identify a leading vehicle and an oncoming vehicle based on the color of the light spot, however, a color camera must be used and therefore the cost may be high. Thus, the present embodiment provides a method for identifying a leading vehicle and an oncoming vehicle using an inexpensive black-and-while camera.

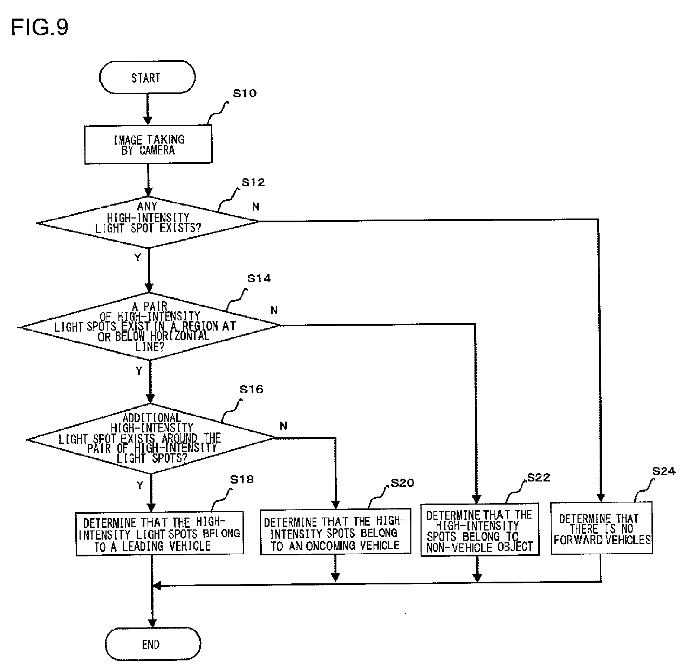

FIG. 9 is a flowchart to explain a method, for detecting a forward vehicle, according to the present embodiment. An image 800 of a front area of a vehicle is first taken by the camera 306 (S10). The data of the captured image 800 are sent to the vehicle control unit 302. The vehicle control unit 302 analyzes the image data supplied from the camera 306 and determines if, in the image 800, there is any high-intensity light spot whose brightness is greater than or equal to a predetermined brightness value (S12). If there is no high-intensity light spot (N of S12), the vehicle control unit 302 will determine that no forward vehicle is present (S24).

If, on the other hand, there is any high-intensity light spot (Y of S12), the vehicle control unit 302 will determine if there are a pair of high-intensity light spots in a region at or below the horizontal line passing through the H-V point (S14). A reason why whether the "pair of high-intensity light spots" are existent or not is determined is as follows. That is, since the oncoming vehicle 801 and the leading vehicle 803 each has lamps on the right and left ends of the vehicle (i.e., a pair of head lamps 801a and a pair of tail lamps 803a, respectively), a pair of high-intensity light spots are observed if there is the oncoming vehicle 801 and/or leading vehicle 803. Suppose here that two high-intensity light spots are observed. If these two high-intensity light spots constitute a pair or not can be determined based on the distance between the two high-intensity light spots and/or the heights of the two high-intensity light spots in the vertical direction. For example, if the two high-intensity light spots are located within a predetermined distance and they are of the same height in the vertical direction, it will be determined that the two high-intensity light spots constitute a pair of them.

If there is no pair of high-intensity light slots in the region at or below the horizontal line passing through the H-V point (N of S14), the vehicle control unit 302 will determine that the light spots observed in Step S12 are objects, such as the street light 802, the delineator 804 and the signal light 806, which are other than a vehicle (S22). As a result, the detection accuracy of a forward vehicle can be further enhanced as compared with the method described in conjunction with FIG. 7.

If there is a pair of high-intensity light spot in the region at or below the horizontal line passing through the H-V point (Y of S14), the vehicle control unit 302 will determine if there is another high-intensity light spot around the already-observed pair of high-intensity light spots (S16). License plate lamp 803b (required by the law) used to illuminate a license plate are provided in the vicinity of the tail lamps 803a of a vehicle (normally provided between the left and right tail lamps 803a). According to the present embodiment, whether the high-intensity light spot of the license plate lamp 803b is existent around the already-observed high-intensity light spots or not is determined so as to identify whether the forward vehicle is a leading vehicle or an oncoming vehicle.

If there is another high-intensity light spot existent around the already-observed pair of high-intensity light spots (Y of S16), the vehicle control unit 302 will determine that the already-observed pair of high-intensity light spots belong to the leading vehicle 803 (S18). If, on the other hand, there is no additional high-intensity light spot existent around the already-observed pair of high-intensity light spots (N of S16), the vehicle control unit 302 will determine that the pair of high-intensity light spots belong to the oncoming vehicle 803 (S20). By employing the method as described above, the light distribution control system 100 according to the present embodiment can identify the leading vehicle and the oncoming vehicle even if the black-and-white camera is used.

Also, if a leading vehicle and an oncoming vehicle are identified based on the color of light spots, a red sign or a vending machined placed on a street may be mistakenly detected as a leading vehicle. The method employed by the present embodiment can avoid such a mistaken detection.

In the light distribution control system 100 according to the present embodiment, a forward vehicle, if any, is detected based on the image taken by the camera 306 and thereby the light distribution pattern is so controlled as not to give glare to the forward vehicle. However, for example, under the condition of rain, it will be difficult for the above-described method to work to perfectly detect the forward vehicle. If the forward vehicle is mistakenly detected in the rain, glare may be given to the driver of the forward vehicle.

Thus, if the forward vehicle flashes its headlights to warn the driver of his/her own vehicle about high beam illumination, the light distribution control system 100 according to the present embodiment performs control such that the light distribution pattern at the present time be forcibly switched to the low beam distribution pattern. Such a warning from the driver of the forward vehicle can be detected by determining whether the brightness of a pair of high-intensity light spots varies by more than a predetermined amount within a predetermined length of time or not. Such a control, performed as described above, avoids giving further glare to the driver of the forward vehicle.

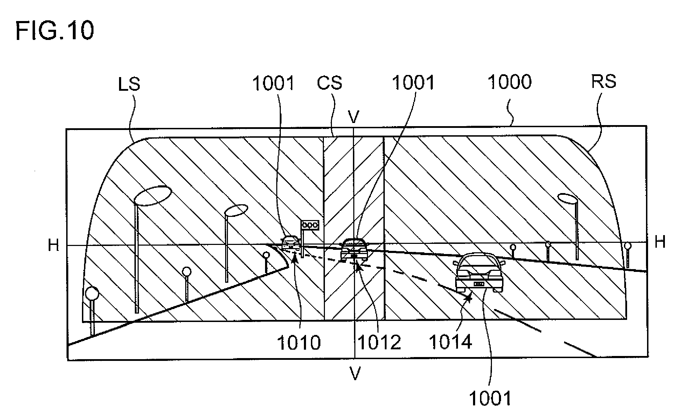

FIG. 10 is a diagram to explain a method for selecting a light distribution pattern in the light distribution control system 100. In FIG. 10, a left shaded region LS, a center shaded region CS and a right shade region RS are superimposed on an image 1000 taken by the camera 306. In the image 1000, the center shaded region CS is a region near the center in the vehicle width direction; the left shaded region CS is a region on the left side of the center shaded region CS; and the right shaded region RS is a region on the right side of the center shaded region CS.

In FIG. 10, the image 1000 shows a situation where the driver's own vehicle moves along a leftward winding road. In the following description, a case where there is an oncoming vehicle 1001 on the oncoming traffic lane side along the winding road. Note here that FIG. 10 shows three oncoming vehicles 1001 for convenience sake but these indicate a single oncoming vehicle, at three different instants, which gradually approaches the driver's vehicle from a far location.

The vehicle control unit 302 compares the position of the oncoming vehicle 1001, obtained by analyzing the image 1000, with each shaded region and thereby determines the optimal light distribution pattern.

As shown in FIG. 10, when the oncoming vehicle 1001 is at a far location 1010, the oncoming vehicle 1001 is positioned within the left shaded region LS. At this instant, no forward vehicles is existent in the center shaded region CS and the right shaded region RS. Thus, in this case, the vehicle control unit 302 selects the right-sided high beam distribution pattern RHi in order not to give glare to the driver of the oncoming vehicle 1001 and to ensure the maximum field of view.

At the time instant when the oncoming vehicle 1001 approaches a position 1012 located near the center in the vehicle width direction, the oncoming vehicle 1001 is positioned within the center shaded region CS. Thus, in this case, the vehicle control unit 302 selects the low beam distribution pattern Lo in order not to give glare to the driver of the oncoming vehicle 1001.

Time further progresses and the oncoming vehicle 1001 approaches a position 1014 located in the vicinity of his/her own vehicle. At this instant, the oncoming vehicle 1001 is positioned within the right shaded region RS. Also, at this instant, no forward vehicles is existent in the center shaded region CS and the left shaded region RS. Thus, in this case, the vehicle control unit 302 selects the left-sided high beam distribution pattern LHi in order not to give glare to the driver of the oncoming vehicle 1001 and to ensure the maximum field of view.

In this manner, the center shaded region CS is provided between the left shaded region LS and the right shaded region RS. Note that whenever the oncoming vehicle 1001 moves between the left shaded region LS and the right shaded region RS, it must pass through the center shaded region CS. Thus, provision of the center shaded region CS enables every switched light distribution pattern to necessarily go through the low beam distribution pattern first, whenever the light distribution pattern is switched between the left-sided high beam distribution pattern LHi and the right-sided high beam distribution pattern RHi

Suppose that no center shaded region CS is provided and therefore the left shaded region LS and the right shaded region RS are arranged side by side. Then the light distribution pattern will be switched between the left-sided high beam distribution pattern LHi and the right-sided high beam distribution pattern RHi. In this case where no center shaded region CS is provided, the field of view of the driver changes abruptly when the light distribution pattern is switched, so that the driver may feel it cumbersome and even uncomfortable. Also, this may become a factor to give glare to the pedestrians and other vehicles. Thus, according to the present embodiment, whenever the light distribution pattern is switched between the left-sided light distribution pattern LHi and the right-sided distribution pattern RHi, the low beam distribution pattern is applied first. This alleviates the abrupt change in the driver's field of view and allows the automotive headlamps to be less likely to give glare to the pedestrians and other drivers.

The present invention has been described based upon illustrative embodiments. These exemplary embodiments are intended to be illustrative only and it will be obvious to those skilled in the art that various modifications to constituting elements and processes could be developed and that such modifications are also within the scope of the present invention.

In the above-described embodiments, while the left-sided high beam distribution pattern is formed by the left-side automotive headlamp and the right-sided high beam distribution pattern is formed by the right-side automotive headlamp, the split light distribution pattern is formed by swiveling the left-side and right-side automotive headlamps. However, the configuration of the automotive headlamps to form the split light distribution pattern is not limited thereto. For example, an arrangement may be such that a plurality of illumination ranges are defined in a frontward direction of a vehicle, and an automotive headlamp is provided with a plurality of high beam units illuminating the respective illumination ranges. In this modification, if it is determined that a forward vehicle is present in any of the plurality of illumination ranges, a high beam unit corresponding to said illumination range is turned off. In this manner, even if the split light distribution is formed, the automotive headlamps are controlled such that the size of the space between the forward vehicle and the illumination range varies according to the position of the forward vehicle in the horizontal direction. As a result, an appropriate space can be ensured between the forward vehicle and the illumination range and therefore the automotive headlamps are less likely to give glare to the forward vehicle.

## Claims

1. A light distribution control system (100) for controlling the light distribution of an automotive headlamp, the system comprising:
left and right automotive headlamps (210) capable of controlling a range of illumination in a front area of a vehicle provided with the system;
a detection means (302) configured to detect a forward vehicle, based on an image capturing the front area of the vehicle provided with the system; and
a control means (302) configured to control the illumination ranges of the left and right automotive headlamp (210) in a manner such that the illumination of the automotive headlamp (210) toward the forward vehicle detected by the detection means is suppressed and the illumination is applied around the forward vehicle,
wherein the control means is configured to move both the illumination range of the left automotive headlamp (210) and the illumination range of the right automotive headlamp (210) in a manner such that the size of the horizontally bilateral spaces between the forward vehicle and the illumination range varies according to a position of the forward vehicle in the horizontal direction, and **characterized in that** the size of each of the horizontal spaces is expressed by a respective angle, each formed by a line extending from the vehicle provided with the system to a respective side surface of the forward vehicle and a line extending from the vehicle provided with the system to a boundary between the respective horizontal space and the illumination range,
and wherein the control means (302) is configured to move both the illumination range of the left automotive headlamp (210) and the illumination range of the right automotive headlamp (210) in a manner such that the size of the horizontally bilateral spaces becomes progressively larger as the position of the forward vehicle in the horizon direction shifts outward in a vehicle width direction from a middle position in the vehicle width direction.

2. A light distribution control system (100) according to Claim 1, wherein the detection means is configured to detect the forward vehicle based on a region covering a predetermined height in the vertical direction or less, in the image capturing a front area of the vehicle.

3. A light distribution control system (100) according to any one of claim 1 or claim 2, wherein when a pair of light spots with brightness greater than or equal to a predetermined value is existent and a light spot is further existent around the pair of light spots in the image capturing a front area of the vehicle, the detection means (302) determines that the leading vehicle is present.

4. A light distribution control system (100) according to Claim 3, wherein when it is detected by the detection means (302) that the brightness of the pair of light spots varies by a predetermined amount within a predetermined length of time, the detection means (302) controls the automotive headlamp (210) so that the automotive headlamp (210) illuminates a low beam distribution pattern.

5. A light distribution control system (100) according to Claim 1, wherein the control means (302) is configured to move both the illumination range of the left automotive headlamp (210) and the illumination range of the right automotive headlamp (210) in a manner such that the horizontally bilateral spaces are equal.

## Patentansprüche

1. Lichtverteilungs-Steuersystem (100) zum Steuern der Lichtverteilung eines Fahrzeugscheinwerfers, wobei das System aufweist:
linke und rechte Fahrzeugscheinwerfer (210), die geeignet sind, eine Ausleuchtungsbereich in einem vorderen Bereich eines mit dem System versehenen Fahrzeugs zu steuern;
ein Erkennungsmittel (302), das dazu konfiguriert ist, ein vorderes Fahrzeug auf der Grundlage eines Bilds, das den vorderen Bereich des mit dem System versehenen Fahrzeugs aufnimmt, zu erkennen; und
ein Steuermittel (302), das dazu konfiguriert ist, die Ausleuchtungsbereiche des linken und des rechten Fahrzeugscheinwerfers (210) derart zu steuern, dass die Ausleuchtung des Fahrzeugscheinwerfers (210) in Richtung des vorderen Fahrzeugs, das von dem Erkennungsmittel erkannt wird, unterdrückt wird und die Ausleuchtung um das vordere Fahrzeug herum erfolgt,
wobei das Steuermittel dazu konfiguriert ist, sowohl den Ausleuchtungsbereich des linken Fahrzeugscheinwerfers (210) als auch den Ausleuchtungsbereich des rechten Fahrzeugscheinwerfers (210) derart zu bewegen, dass die Größe der horizontal bilateralen Abstände zwischen dem vorderen Fahrzeug und dem Ausleuchtungsbereich mit der Position des vorderen Fahrzeugs in horizontaler Richtung variiert, und
**dadurch gekennzeichnet, dass**
die Größe jedes der horizontalen Abstände durch einen entsprechenden Winkel ausgedrückt wird, der jeweils durch eine Linie gebildet wird, die sich von dem mit dem System versehenen Fahrzeug an eine entsprechende Seitenfläche des vorderen Fahrzeugs erstreckt, und eine Linie, die sich von dem mit dem System versehenen Fahrzeug zu einer Grenze zwischen dem entsprechenden horizontalen Abstand und dem Ausleuchtungsbereich erstreckt,
und wobei das Steuermittel (302) dazu konfiguriert ist, sowohl den Ausleuchtungsbereich des linken Fahrzeugscheinwerfers (210) als auch den Ausleuchtungsbereich des rechten Fahrzeugscheinwerfers (210) derart zu bewegen, dass die Größe der horizontal bilateralen Abstände progressiv zunimmt, wenn sich die Position des vorderen Fahrzeugs in horizontaler Richtung von einer in der Fahrzeugbreitenrichtung mittleren Position in Fahrzeugbreitenrichtung nach außen bewegt.

2. Lichtverteilungs-Steuersystem (100) nach Anspruch 1, wobei das Erkennungsmittel dazu konfiguriert ist, das vordere Fahrzeug basierend auf einem Bereich zu erkennen, der in dem Bild, das einen vorderen Bereich des Fahrzeugs aufnimmt, eine vorgegebene Höhe in vertikaler Richtung oder weniger umfasst.

3. Lichtverteilungs-Steuersystem (100) nach einem der Ansprüche 1 oder 2, wobei, wenn in dem Bild, das einen vorderen Bereich des Fahrzeugs aufnimmt, ein Paar von Lichtpunkten mit einer Helligkeit existiert, die größer oder gleich einem vorgegebenen Wert ist, und des Weiteren ein Lichtpunkt um das Paar von Lichtpunkten herum existiert, das Erkennungsmittel (302) bestimmt, dass das vordere Fahrzeug vorhanden ist.

4. Lichtverteilungs-Steuersystem (100) nach Anspruch 3, wobei, wenn das Erkennungsmittel (302) erkennt, dass die Helligkeit des Paars von Lichtpunkten innerhalb eines vorgegebenen Zeitraums um einen vorgegebenen Betrag variiert, das Erkennungsmittel (302) den Fahrzeugscheinwerfer (210) derart steuert, dass der Fahrzeugscheinwerfer (210) ein Abblendlicht-Verteilungsmuster ausleuchtet.

5. Lichtverteilungs-Steuersystem (100) nach Anspruch 1, wobei das Steuermittel (302) dazu konfiguriert ist, sowohl den Ausleuchtungsbereich des linken Fahrzeugscheinwerfers (210) als auch den Ausleuchtungsbereich des rechten Fahrzeugscheinwerfers (210) derart zu bewegen, dass die horizontal bilateralen Abstände gleich sind.

## Revendications

1. Système de commande de distribution de lumière (100) pour commander la distribution de lumière d'un phare pour automobile, le système comprenant :
des phares pour automobile gauche et droit (210) susceptibles de commander une plage d'éclairage dans une zone avant d'un véhicule muni du système ;
un moyen de détection (302) configuré pour détecter un véhicule en avant, en se basant sur une image capturant la zone avant du véhicule muni du système ; et
un moyen de commande (302) configuré pour commander les plages d'éclairage du phare pour automobile gauche et droit (210) de sorte que l'éclairage du phare pour automobile (210) vers le véhicule en avant détecté par le moyen de détection est supprimé et l'éclairage est appliqué autour du véhicule en avant,
dans lequel le moyen de commande est configuré pour déplacer tant la plage d'éclairage du phare pour automobile gauche (210) que la plage d'éclairage du phare pour automobile droit (210) de sorte que la taille des espaces horizontalement bilatéraux entre le véhicule en avant et la plage d'éclairage varie selon une position du véhicule en avant dans la direction horizontale, et
**caractérisé en ce que**
la taille de chacun des espaces horizontaux est exprimée par un angle respectif, chacun formé par une ligne s'étendant à partir du véhicule muni du système jusqu'à une surface latérale respective du véhicule en avant et une ligne s'étendant à partir du véhicule muni du système jusqu'à une frontière entre l'espace horizontal respectif et la plage d'éclairage,
et dans lequel le moyen de commande (302) est configuré pour déplacer tant la plage d'éclairage du phare pour automobile gauche (210) que la plage d'éclairage du phare pour automobile droit (210) de sorte que la taille des espaces horizontalement bilatéraux devient progressivement plus grande comme la position du véhicule en avant dans la direction horizontale se décale vers l'extérieur dans un sens de la largeur du véhicule à partir d'une position médiane dans le sens de la largeur de véhicule.

2. Système de commande de distribution de lumière (100) selon la revendication 1, dans lequel le moyen de détection est configuré pour détecter le véhicule en avant en se basant sur une région couvrant une hauteur prédéterminée dans la direction verticale ou moins, dans l'image capturant une zone avant du véhicule.

3. Système de commande de distribution de lumière (100) selon n'importe laquelle de la revendication 1 ou de la revendication 2, dans lequel quand un couple de points lumineux avec une luminosité supérieure ou égale à une valeur prédéterminée est existant et qu'un point lumineux est en outre existant autour du couple de points lumineux dans l'image capturant une zone avant du véhicule, le moyen de détection (302) détermine que le véhicule de tête est présent.

4. Système de commande de distribution de lumière (100) selon la revendication 3, dans lequel lorsque l'on détecte par le moyen de détection (302) que la luminosité du couple de points lumineux varie d'une quantité prédéterminée dans les limites d'une durée prédéterminée, le moyen de détection (302) commande le phare pour automobile (210) de sorte que le phare pour automobile (210) éclaire un motif de distribution de faisceau bas.

5. Système de commande de distribution de lumière (100) selon la revendication 1, dans lequel le moyen de commande (302) est configuré pour déplacer tant la plage d'éclairage du phare pour automobile gauche (210) que la plage d'éclairage du phare pour automobile droit (210) de sorte que les espaces horizontalement bilatéraux sont égaux.
